# EUROPEAN PATENT SPECIFICATION

(11) **EP 4 266 885 B1**
(45) Date of publication and mention of the grant of the patent: **10.09.2025**
(21) Application number: 21835300.1
(22) Date of filing: 13.12.2021
(51) Int. Cl.: A01N 43/713, A01N 43/40, A01N 53/12, A01P 3/00

(54) **PESTICIDAL MIXTURES**
PESTIZIDE MISCHUNGEN
MÉLANGES PESTICIDES

(30) Priority: 23.12.2020 EP 20216797; 25.11.2021 EP 21210467
(43) Date of publication of application: 01.11.2023
(73) Proprietor: BASF SE, 67056 Ludwigshafen am Rhein (DE)
(72) Inventor: MONTAG, Jurith, 67117 Limburgerhof (DE); BRAHM, Lutz, 67117 Limburgerhof (DE); GEWEHR, Markus, 67117 Limburgerhof (DE)
(74) Representative: BASF IP Association
(86) International application number: PCT/EP2021/085508
(87) International publication number: WO 2022/136000

(56) References cited:
- WO-A1-2018/177894
- WO-A1-2019/173665
- WO-A1-2020/173705

## Description

The present invention relates to fungicidal mixtures comprising
1) metyltetraprole as compound I and
2) a fungicidal compound II, where compound II is compound II-1, compound II-1 being [(1S,2S)-1-methyl-2-(o-tolyl)propyl] (2S)-2-[(4-methoxy-3-propanoyloxy-pyridine-2-carbonyl)amino]propanoate.

Moreover, the invention relates to a method for controlling pests, this includes animal pests and harmful fungi, using the inventive mixtures and the use of compound I and compound II for preparing such mixtures, and also compositions comprising such mixtures.

Additionally, the present invention also comprises a method for protection of plant propagation material (preferably seed) from harmful fungi or comprising contacting the plant propagation materials (preferably seeds) with an inventive mixture in pesticidally effective amounts The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring. In a particular preferred embodiment, the term propagation material denotes seeds.

Additionally, the present invention also comprises a method for protection of plant propagation material (preferably seed) from harmful fungi comprising contacting the plant propagation materials (preferably seeds) with the inventive mixture in pesticidally effective amounts.

Moreover, the invention relates to a method for controlling harmful fungi using the inventive mixtures and to the use of the compounds present in the inventive mixtures for preparing such mixtures, and also to compositions comprising such mixtures.

The present invention further relates to plant-protecting active ingredient mixtures having synergistically enhanced activity of improving the health of plants and to a method of applying such inventive mixtures to the plants.

Compound I and analogues as well as its pesticidal activity and methods for producing it are known e.g. from WO 2013/162072. Combinations comprising compound I and florylpicoxamid are known from WO 2020/173705.

Compounds II as well as their pesticidal activity and methods for producing them are known from known from WO 2019/173665, WO WO2018/177894 and WO 2020/212513.

One typical problem arising in the field of pest control lies in the need to reduce the dosage rates of the active ingredient in order to reduce or avoid unfavorable environmental or toxicological effects whilst still allowing effective pest control.

In regard to the instant invention the term pests embrace harmful fungi and animal pests.

Another problem encountered concerns the need to have available pest control agents which are effective against a broad spectrum of harmful fungi and harmful animal pests.

There also exists the need for pest control agents that combine knock-down activity with prolonged control, that is, fast action with long lasting action.

Another difficulty in relation to the use of pesticides is that the repeated and exclusive application of an individual pesticidal compound leads in many cases to a rapid selection of pests, that means animal pests, and harmful fungi, which have developed natural or adapted resistance against the active compound in question. Therefore, there is a need for pest control agents that help prevent or overcome resistance.

Another problem underlying the present invention is the desire for compositions that improve plants, a process which is commonly and hereinafter referred to as "plant health".

The term plant health comprises various sorts of improvements of plants that are not connected to the control of pests. For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), reduced ethylene (reduced production and/or inhibition of reception), tillering increase, increase in plant height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less plant verse (lodging), increased shoot growth, enhanced plant vigor, increased plant stand and early and better germination; or any other advantages familiar to a person skilled in the art.

It was therefore an object of the present invention to provide pesticidal mixtures which solve the problems of reducing the dosage rate and / or enhancing the spectrum of activity and / or combining knock-down activity with prolonged control and / or to resistance management and/or promoting the health of plants.

We have found that this object is in part or in whole achieved by the fungicidal mixtures comprising
1) metyltetraprole and
2) a fungicidal compound II, where compound II is compound II-1, compound II-1 being [(1S,2S)-1-methyl-2-(o-tolyl)propyl] (2S)-2-[(4-methoxy-3-propanoyloxy-pyridine-2-carbonyl)amino]propanoate.

Compound II-1 has the structure II-1 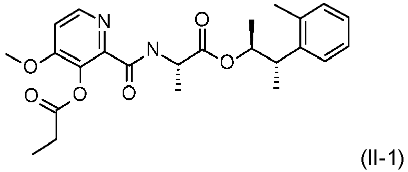
Compound II-2 has the structure II-2

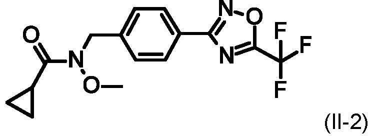

Especially, it has been found that the mixtures as defined in the outset show markedly enhanced activity against pests compared to the control rates that are possible with the individual compounds and/or is suitable for improving the health of plants when applied to plants, parts of plants, seeds, or at their locus of growth.

It has been found that the activity of the inventive mixtures comprising compound I and compound II goes far beyond the fungicidal and/or plant health improving activity of the active compounds present in the mixture alone (synergistic activity).

Moreover, we have found that simultaneous, that is joint or separate, application of the compound I and the compound II or successive application of the compound I and the compound II allows enhanced control of harmful fungi, compared to the control rates that are possible with the individual compounds (synergistic mixtures).

Moreover, we have found that simultaneous, that is joint or separate, application of the compound I and the compound II or successive application of the compound I and the compound II provides enhanced plant health effects compared to the plant health effects that are possible with the individual compounds.

The ratio by weight of compound I and compound II in binary mixtures is from 10000:1 to 1:10000, from 500:1 to 1:500, preferably from 100:1 to 1:100 more preferably from 50:1 to 1:50, most preferably from 20:1 to 1:20, including also ratios from 10:1 to 1:10, 1:5 to 5:1, or 1:1. The inventive mixture comprises compound I and compound II-1.

In one embodiment the inventive mixture comprises compound I and a mixture of compound II-1 and compound II-2 as compound II.

Mixing compositions comprising compound I (component 1) and compound II (component 2) with other fungicides as compound III (component 3) results in many cases in an expansion of the fungicidal spectrum of activity or in a prevention of fungicide resistance development. Furthermore, in many cases, synergistic effects are obtained (synergistic mixtures).

In the ternary mixtures, i.e. compositions comprising compound I, compound II and compound III, the weight ratio of compound I and compound II depends from the properties of the active substances used, usually it is in the range of from 1:100 to 100:1, regularly from 1:50 to 50:1, preferably from 1:20 to 20:1, more preferably from 1:10 to 10:1 and in particular from 1:4 to 4:1, and the weight ratio of compound I and compound III usually it is in the range of from 1:100 to 100:1, regularly from 1:50 to 50:1, preferably from 1:20 to 20:1, more preferably from 1:10 to 10:1 and in particular from 1:4 to 4:1. Any further active components are, if desired, added in a ratio of from 20:1 to 1:20 to the compound I. These ratios are also suitable for mixtures applied by seed treatment.

Especially preferred compounds III are Mefentrifluconazol, Fluxapyroxad, Pyraclostrobin, copper oxychloride, Mancozeb, Chlorothalonil, Prothioconazole, Difenoconazole, Pydiflumetofen, Benzovindiflupyr, Inpyrfluxam, Fluindapyr, Epoxiconazole, Tebuconazole, Metconazole, Fenpropimorph, Fenpropidin and Fluoxytioconazole.

Particularly preferred mixtures are the following:

| Mixture | Component 1 (Compound I) | Component 2 (Compound II) | Component 3 (Compound III) |
|---|---|---|---|
| 1-1.1 | I | II-1 | mefentrifluconazol |
| 1-3.1 | I | II-1, II-2 | Mefentrifluconazol |
| 1-1.2 | I | II-1 | Fluxapyroxad |
| 1-3.2 | I | II-1, II-2 | Fluxapyroxad |
| 1-1.3 | I | II-1 | Pyraclostrobin |
| 1-3.3 | I | II-1, II-2 | Pyraclostrobin |
| 1-1.4 | I | II-1 | copper oxychloride |
| 1-3.4 | I | II-1, II-2 | copper oxychloride |
| 1-1.5 | I | II-1 | Mancozeb |
| 1-3.5 | I | II-1, II-2 | Mancozeb |
| 1-1.6 | I | II-1 | Chlorothalonil |
| 1-3.6 | I | II-1, II-2 | Chlorothalonil |
| 1-1.7 | I | II-1 | Prothioconazole |
| 1-3.7 | I | II-1, II-2 | Prothioconazole |
| 1-1.8 | I | II-1 | Difenoconazole |
| 1-3.8 | I | II-1, II-2 | Difenoconazole |
| 1-1.9 | I | II-1 | Pydiflumetofen |
| 1-3.9 | I | II-1, II-2 | Pydiflumetofen |
| 1-1.10 | I | II-1 | Benzovindiflupyr |
| 1-3.10 | I | II-1, II-2 | Benzovindiflupyr |
| 1-1.11 | I | II-1 | Inpyrfluxam |
| 1-3.11 | I | II-1, II-2 | Inpyrfluxam |
| 1-1.12 | I | II-1 | Fluindapyr |
| 1-3.12 | I | II-1, II-2 | Fluindapyr |
| 1-1.13 | I | II-1 | Epoxiconazole |
| 1-3.13 | I | II-1, II-2 | Epoxiconazole |
| 1-1.14 | I | II-1 | Tebuconazole |
| 1-3.14 | I | II-1, II-2 | Tebuconazole |
| 1-1.15 | I | II-1 | Metconazole |
| 1-3.15 | I | II-1, II-2 | Metconazole |
| 1-1.16 | I | II-1 | Fenpropimorph |
| 1-3.16 | I | II-1, II-2 | Fenpropimorph |
| 1-1.17 | I | II-1 | Fenpropidin. |
| 1-3.17 | I | II-1, II-2 | Fenpropidin. |
| 1-1.18 | I | II-1 | Fluoxytioconazole. |
| 1-3.18 | I | II-1, II-2 | Fluoxytioconazole. |

All above-referred mixtures are herein below referred to as "inventive mixtures" or "mixtures according to the invention".

The inventive mixtures can further contain one or more insecticides, fungicides, herbicides.

The inventive mixtures can be converted into customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

The resulting agrochemical compositions generally comprise between 0.01 and 95%, preferably between 0.1 and 90%, and in particular between 0.5 and 75%, by weight of active substance. The active substances are employed in a purity of from 90% to 100%, preferably from 95% to 100% (according to NMR spectrum).

Solutions for seed treatment (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds. The compositions in question give, after two-to-tenfold dilution, active substance concentrations of from 0.01 to 60% by weight, preferably from 0.1 to 40%, in the ready-to-use preparations. Application can be carried out before or during sowing. Methods for applying the inventive mixtures and compositions thereof, respectively, on to plant propagation material, especially seeds include dressing, coating, pelleting, dusting, soaking and in-furrow application methods of the propagation material. Preferably, the inventive mixtures or the compositions thereof, respectively, are applied on to the plant propagation material by a method such that germination is not induced, e. g. by seed dressing, pelleting, coating and dusting.

When employed in plant protection, the amounts of active substances applied are, depending on the kind of effect desired, from 0.001 to 2 kg per ha, preferably from 0.005 to 2 kg per ha, more preferably from 0.01 to 1.0 kg per ha, and in particular from 0.05 to 0.75 kg per ha.

In treatment of plant propagation materials such as seeds, e. g. by dusting, coating or drenching seed, amounts of active substance of from 0.01-10 kg, preferably from 0.1-1000 g, more preferably from 1-100 g per 100 kilogram of plant propagation material (preferably seeds) are generally required.

When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, individual components of the composition according to the invention such as parts of a kit or parts of a binary mixture may be mixed by the user himself in a spray tank or any other kind of vessel used for applications (e. g. seed treater drums, seed pelleting machinery, knapsack sprayer) and further auxiliaries may be added, if appropriate. Consequently, one embodiment of the invention is a kit for preparing a usable pesticidal composition, the kit comprising a) a composition comprising component 1) as defined herein and at least one auxiliary; and b) a composition comprising component 2) as defined herein and at least one auxiliary; and optionally c) a composition comprising at least one auxiliary and optionally a further active component 3) as defined herein.

As said above, the present invention comprises amethod for controlling harmful fungi, wherein the pest, their habitat, breeding grounds, their locus or the plants to be protected against pest attack, the soil or plant propagation material (preferably seed) are treated with a pesticidally effective amount of an inventive mixture.

Advantageously, the inventive mixtures are suitable for controlling fungal plant diseases.

The mixtures according to the present invention, respectively, are also suitable for controlling harmful fungi in the protection of stored products or harvest and in the protection of materials.

The term "protection of materials" is to be understood to denote the protection of technical and non-living materials, such as adhesives, glues, wood, paper and paperboard, textiles, leather, paint dispersions, plastics, cooling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichoderma* spp., *Alternaria* spp., *Paecilomyces* spp. and Zygomycetes such as *Mucor* spp., and in addition in the protection of stored products and harvest the following yeast fungi are worthy of note: *Candida* spp. and *Saccharomyces cerevisiae.*

They are also important for controlling a multitude of fungi on various cultivated plants, such as bananas, cotton, vegetable species (for example cucumbers, beans and cucurbits), cereals such as wheat, rye, barley, rice, oats; grass coffee, potatoes, corn, fruit species, soya, tomatoes, grapevines, ornamental plants, sugar cane and also on a large number of seeds. In a preferred embodiment, the inventive mixtures are used in soya (soybean), cereals and corn. In a preferred embodiment, the inventive mixtures are used in soya (soybean).

The inventive mixtures are particularly suitable for controlling wheat diseases caused by Alternaria spp. (Alternaria leaf spot), Ascochyta tritici (anthracnose), Blumeria (formerly Erysiphe) graminis (powdery mildew), Botrytis cinerea (teleomorph: Botryotinia fuckeliana: grey mold), Cladosporium herbarum (black ear), Drechslera (syn. Helminthosporium, teleomorph: Pyrenophora) tritici-repentis (tan spot), Epicoccum spp. (black mold), Fusarium (teleomorph: Gibberella) graminearum or Fusarium culmorum (root rot, scab or head blight), Gaeumannomyces graminis (take-all), Microdochium (syn. Fusarium) nivale (pink snow mold), Mycosphaerella 15 graminicola (anamorph: Septoria tritici, Septoria blotch), Polymyxa graminis, Pseudocercosporella herpotrichoides (eyespot, teleomorph: Tapesia yallundae), Puccinia graminis (stem or black rust), Puccinia recondita (brown or leaf rust), Pyrenophora (anamorph: Drechslera) triti-cirepentis (tan spot), Pythium spp. (damping-off), Rhizoctonia cerealis (Rhizoctonia spring blight), Septoria tritici (Septoria blotch), Stagonospora nodorum (Stagonospora blotch, teleomorph: Leptosphaeria [syn. Phaeosphaeria] nodorum), Tilletia. tritici (syn. Tilletia caries, wheat bunt), T. controversa (dwarf bunt) or Typhula incarnata (grey snow mold).

The inventive mixtures are also particularly suitable for controlling barley diseases caused by Ascochyta hordei, Bipolaris (teleomorph: Cochliobolus, spot blotch) sorokiniana, Blumeria (formerly Erysiphe) graminis (powdery mildew), Botrytis cinerea (teleomorph: Botryotinia fuckeliana : grey mold), Cladosporium herbarum (black ear), Claviceps purpurea (ergot), Cochliobolus (anamorph: Helminthosporium of Bipolaris) sativus, Drechslera (syn. Helminthosporium, teleomorph: Pyrenophora ) teres, Epicoccum spp. (black mold), Fusarium (teleomorph: Gibberella ) culmorum (root rot, scab or head blight) on cereals (e.g. wheat or barley), Gaeumannomyces graminis (take-all), Gibberella spp. (e. g. G. zeae), Helmintho-sporium spp. (syn. Drechslera , teleomorph: Cochliobolus), Microdochium (syn. Fusarium) nivale (pink snow mold), Mycosphaerella spp. , Polymyxa spp., Pseudocercosporella herpotrichoides (eyespot, teleomorph: Tapesia yallundae ), Puccinia recondita (brown or leaf rust), Pyrenophora (anamorph: Drechslera ) teres (net blotch), Pyricularia grisea, Ramularia collo-cygni (Ramularia leaf spots, Physiological leaf spots), Rhizoctonia cerealis (Rhizoctonia spring blight), Rhynchosporium secalis (scald), Septoria (syn. Stagonospora ) nodorum (Stagonospora blotch), Stagonospora spp. , Tilletia spp. (common bunt or stinking smut), Typhula incarnata (grey snow mold), or Ustilago spp. (loose smut), e. g. U. nuda and U. avaenae.

The inventive mixtures are particularly suitable for controlling wheat diseases caused by Septoria tritici, Microduchium nivale, Erysiphe graminis tritici, Phaeospheria nodorum or Pyrenophera tritici-repentis.

The inventive mixtures are also particularly suitable for controlling barley diseases caused by Erysiphe graminis hordei, Pyrenophera teres, Ramularia collicygni or Rynchosporium secalis. The inventive mixtures are also particularly suitable for controlling wheat diseases caused by Puccinia recondita (brown or leaf rust), Puccinia striiformis (stripe or yellow rust), or Puccinia graminis (stem or black rust).

The inventive mixtures are also particularly suitable for controlling barley diseases caused by Puccinia recondita (brown or leaf rust), Puccinia striiformis (stripe or yellow rust), or Puccinia graminis (stem or black rust).

The mixtures according to the present invention are especially useful for controlling phytopathogenic fungi in cereals such as wheat, barley or rye, especially on wheat and barley.

In one especially preferred embodiment, the inventive mixtures are used for controlling the following phytopathogenic fungi on wheat: Septoria tritici, Pyrenophera tritici-repentis, Microduchium nivale, Erysiphe graminis tritici or Phaeospheria nodorum.

In one especially preferred embodiment, the inventive mixtures are used for controlling the following phytopathogenic fungi on barley: Erysiphe graminis hordei, Pyrenophera teres, Ramularia collicygni or Rynchosporium secalis.

In one especially preferred embodiment, the inventive mixtures are used for controlling the following phytopathogenic fungi on wheat, barley or rye: Puccinia recondita (brown or leaf rust), Puccinia striiformis (stripe or yellow rust), or Puccinia graminis (stem or black rust).

In preferred embodiments, the following inventive mixtures can be used on the following crops and pests:

| | | | |
|---|---|---|---|
| Metyltetraprole | II-1 | wheat | Microduchium nivale |
| Metyltetraprole | II-1 | wheat | Erysiphe graminis tritici |
| Metyltetraprole | II-1 | wheat | Septoria tritici |
| Metyltetraprole | II-1 | wheat | Phaeospheria nodorum |
| Metyltetraprole | II-1 | wheat | Pyrenophera tritici-repentis |
| Metyltetraprole | II-1 | wheat | Puccinia recondita |
| Metyltetraprole | II-1 | wheat | Puccinia striiformis |
| Metyltetraprole | II-1 | wheat | Puccinia graminis |
| Metyltetraprole | II-1 | barley | Erysiphe graminis hordei |
| Metyltetraprole | II-1 | barley | Pyrenophera teres |
| Metyltetraprole | II-1 | barley | Ramularia collicygni |
| Metyltetraprole | II-1 | barley | Rynchosporium secalis |
| Metyltetraprole | II-1 | barley | Puccinia recondita |
| Metyltetraprole | II-1 | barley | Puccinia striiformis |
| Metyltetraprole | II-1 | barley | Puccinia graminis |
| Metyltetraprole | II-1 | rye | Puccinia recondita |
| Metyltetraprole | II-1 | rye | Puccinia striiformis |
| Metyltetraprole | II-1 | rye | Puccinia graminis |

Preferably, the inventive mixtures are suitable for controlling the following fungal diseases on soybeans: *Alternaria* spp. (Alternaria leaf spot); *Cercospora* spp. (Cercospora leaf spots), e. g. *C. sojina* or *C*. *kikuchii*); *Colletotrichum* (teleomorph: *Glomerella*) spp. (anthracnose), e. g. *C. truncatum* or *C*. *gloeosporioides*); *Corynespora cassiicola* (leaf spots); *Dematophora* (teleomorph: *Rosellinia*) *necatrix* (root and stem rot); *Diaporthe* spp., e. g. *D. phaseolorum* (damping off); *Fusarium* (teleomorph: *Gibberella*) spp. (wilt, root or stem rot), e.g. *F. tucumaniae* and F. *brasiliense* each causing sudden death syndrome on soybeans; *Macrophomina phaseolina* (syn. *phaseoli*) (root and stem rot); *Microsphaera diffusa* (powdery mildew); *Peronospora* spp. (downy mildew), e. g. *P. manshurica; Phakopsora pachyrhizi* and *P*. *meibomiae* (soybean rust); *Phialophora* spp., e. g. *P. gregata:* stem rot; *Phomopsis* spp., e. g. stem rot: *P. phaseoli* (teleomorph: *Diaporthe phaseolorum*); *Pythium* spp. (damping-off); *Phytophthora* spp. (wilt, root, leaf, fruit and stem root), e. g. *P. megasperma,* syn. *P*. *sojae*); *Rhizoctonia* spp., e. g. *R. solani* (root and stem rot); *Sclerotinia* spp. (stem rot or white mold); *Septoria* spp., e. g. *S. glycines* (brown spot); *S. rolfsii* (syn. *Athelia rolfsii); Thielaviopsis* spp. (black root rot).

More preferably, the inventive mixtures are suitable for controlling the following fungal diseases on soybeans: Alternaria spp. (Alternaria leaf spot); Cercospora spp. (Cercospora leaf spots), e. g. C. sojina or C. kikuchii); Colletotrichum (teleomorph: Glomerella) spp. (anthracnose), e. g. C. truncatum or C. gloeosporioides); Corynespora cassiicola (leaf spots); Diaporthe spp., e. g. D. phaseolorum (damping off); Fusarium (teleomorph: Gibberella) spp. (wilt, root or stem rot), e.g. F. tucumaniae and F. brasiliense each causing sudden death syndrome on soybeans; Macrophomina phaseolina (syn. phaseoli) (root and stem rot); Peronospora spp. (downy mildew), e. g. P. manshurica ; Phakopsora pachyrhizi and P. meibomiae (soybean rust); Phomopsis spp., e. g. stem rot: P. phaseoli (teleomorph: Diaporthe phaseolorum); Phytophthora spp. (wilt, root, leaf, fruit and stem root), e. g. P. megasperma, syn. P. sojae); Rhizoctonia spp., e. g. R. solani (root and stem rot); Septoria spp., e. g. S. glycines (brown spot).

The mixtures according to the present invention are particularly important for controlling phytopathogenic harmful fungi on soybean.

The mixtures according to the present invention are also particularly important for controlling Phakopsora pachyrhizi, P. meibomiae (soybean rust), Cercospora sojina, Cercospora kikuchii, Corynospera cassiicula, Colletotrichum truncatum, Sclerotinia sclerotiorum, Microsphaera diffusa, Septoria glycine, Peronospora manshurica or Diaporthe caulivora (D. phaseolorum var. Caulivora), in each case on soybean

The mixtures according to the present invention are particularly important for controlling Phakopsora pachyrhizi and P. meibomiae (soybean rust).

The mixtures according to the present invention are also particularly important for controlling Cercospora sojina, Cercospora kikuchii or Corynospera cassiicula on soybean.

Preferably, compositions of the invention are applied to the following crops as listed in Table 1.

**Table 1: Preferred combinations of mixtures of the invention and crops**

| Mixture | Component 1 | Component 2 | Crop |
|---|---|---|---|
| 1-1 | I | II-1 | soybean |
| 1-2 | I | II-1, II-2 | soybean |

Preferably, compositions of the invention as listed in table 2 are applied to the following crops and fungi as listed in Table 2.

**Table 2: Preferred combinations of mixtures of compound I and II of the invention, crops and fungi**

| Mixture | Component 1 | Component 2 | Crop | fungi |
|---|---|---|---|---|
| 1-1 | I | II-1 | soybean | Phakopsora pachyrhizi |
| 1-2 | I | II-1, II-2 | soybean | Phakopsora pachyrhizi |
| 1-1 | I | II-1 | soybean | P. meibomiae (soybean rust) |
| 1-3 | I | II-1, II-2 | soybean | P. meibomiae (soybean rust) |
| 1-1 | I | II-1 | soybean | Cercospora sojina |
| 1-3 | I | II-1, II-2 | soybean | Cercospora sojina |
| 1-1 | I | II-1 | soybean | Cercospora kikuchii |
| 1-3 | I | II-1, II-2 | soybean | Cercospora kikuchii |
| 1-1 | I | II-1 | soybean | Colletotrichum truncatum |
| 1-3 | I | II-1, II-2 | soybean | Colletotrichum truncatum |
| 1-1 | I | II-1 | soybean | Sclerotinia sclerotiorum |
| 1-3 | I | II-1, II-2 | soybean | Sclerotinia sclerotiorum |
| 1-1 | I | II-1 | soybean | Microsphaera diffusa |
| 1-3 | I | II-1, II-2 | soybean | Microsphaera diffusa |
| 1-1 | I | II-1 | soybean | Septoria glycine |
| 1-3 | I | II-1, II-2 | soybean | Septoria glycine |
| 1-1 | I | II-1 | soybean | Peronospora manshurica |
| 1-3 | I | II-1, II-2 | soybean | Peronospora manshurica |
| 1-1 | I | II-1 | soybean | Diaporthe caulivora |
| 1-3 | I | II-1, II-2 | soybean | Diaporthe caulivora |
| 1-1 | I | II-1 | soybean | Corynospera cassiicula |
| 1-3 | I | II-1, II-2 | soybean | Corynospera cassiicula |

In one embodiment, compositions of the invention comprising at least three active compounds as listed in table 3 to 19 are applied to the following crops and pests as listed in Table 3 to 20

**Table 3: Preferred combinations of mixtures of compound I and II of the invention, crops and fungi**

| Mixture | Component 1 | Component 2 | Component 3 | Crop | Fungi |
|---|---|---|---|---|---|
| 1-1.1 | I | II-1 | mefentrifluconazol | soybean | Phakopsora pachyrhizi |
| 1-3.1 | I | II-1, II-2 | Mefentrifluconazol | soybean | Phakopsora pachyrhizi |
| 1-1.1 | I | II-1 | Mefentrifluconazol | soybean | P. meibomiae (soybean rust) |
| 1-3.1 | I | II-1, II-2 | mefentrifluconazol | soybean | P. meibomiae (soybean rust) |
| 1-1.1 | I | II-1 | Mefentrifluconazol | soybean | Cercospora sojina |
| 1-3.1 | I | II-1, II-2 | Mefentrifluconazol | soybean | Cercospora sojina |
| 1-1.1 | I | II-1 | Mefentrifluconazol | soybean | Cercospora kikuchii |
| 1-3.1 | I | II-1, II-2 | Mefentrifluconazol | soybean | Cercospora kikuchii |
| 1-1.1 | I | II-1 | Mefentrifluconazol | soybean | Colletotrichum truncatum |
| 1-3.1 | I | II-1, II-2 | Mefentrifluconazol | soybean | Colletotrichum truncatum |
| 1-1.1 | I | II-1 | Mefentrifluconazol | soybean | Sclerotinia sclerotiorum |
| 1-3.1 | I | II-1, II-2 | Mefentrifluconazol | soybean | Sclerotinia sclerotiorum |
| 1-1.1 | I | II-1 | Mefentrifluconazol | soybean | Microsphaera diffusa |
| 1-3.1 | I | II-1, II-2 | Mefentrifluconazol | soybean | Microsphaera diffusa |
| 1-1.1 | I | II-1 | Mefentrifluconazol | soybean | Septoria glycine |
| 1-3.1 | I | II-1, II-2 | Mefentrifluconazol | soybean | Septoria glycine |
| 1-1.1 | I | II-1 | Mefentrifluconazol | soybean | Peronospora manshurica |
| 1-3.1 | I | II-1, II-2 | Mefentrifluconazol | soybean | Peronospora manshurica |
| 1-1.1 | I | II-1 | Mefentrifluconazol | soybean | Diaporthe caulivora |
| 1-3.1 | I | II-1, II-2 | Mefentrifluconazol | soybean | Diaporthe caulivora |
| 1-1.1 | I | II-1 | Mefentrifluconazol | soybean | Corynospera cassiicula |
| 1-3.1 | I | II-1, II-2 | Mefentrifluconazol | soybean | Corynospera cassiicula |

The third number in the mixture number denotes compound III. For example, mixture 1-1.1 denotes ternary mixture containing Mefentrifluconazol. Mixture 1-1.2 denotes ternary mixture containing Fluxapyroxad.

Table 4 lists preferred uses of mixtures 1-1.2and 1-3.2 instead of 1-1.1and 1-3.1 and differs from table 3 only in that compound III (component 3) is Fluxapyroxad but is otherwise identical to table 3.

Table 5 lists preferred uses of mixtures1-1.3and 1-3.3 instead of 1-1.1and 1-3.1 and differs from table 3 only in that compound III (component 3) is Pyraclostrobin but is otherwise identical to table 3.

Table 6 lists preferred uses of mixtures1-1.4and 1-3.4 instead of 1-1.1and 1-3.1 and differs from table 3 only in that compound III (component 3) is copper oxychloride but is otherwise identical to table 3.

Table 7 lists preferred uses of mixtures1-1.5and 1-3.5 instead of 1-1.1and 1-3.1 and differs from table 3 only in that compound III (component 3) is Mancozeb but is otherwise identical to table 3.

Table 8 lists preferred uses of mixtures1-1.6 and 1-3.6 instead of 1-1.1and 1-3.1 and differs from table 3 only in that compound III (component 3) is Chlorothalonil but is otherwise identical to table 3.

Table 9 lists preferred uses of mixtures1-1.7 and 1-3.7 instead of 1-1.1 and 1-3.1 and differs from table 3 only in that compound III (component 3) is Prothioconazole but is otherwise identical to table 3.

Table 10 lists preferred uses of mixtures1-1.8 and 1-3.8 instead of 1-1.1 and 1-3.1 and differs from table 3 only in that compound III (component 3) is Difenoconazole but is otherwise identical to table 3.

Table 11 lists preferred uses of mixtures1-1.9 and 1-3.9 instead of 1-1.1 and 1-3.1 and differs from table 3 only in that compound III (component 3) is Pydiflumetofen but is otherwise identical to table 3.

Table 12 lists preferred uses of mixtures1-1.10 and 1-3.10 instead of 1-1.1 and 1-3.1 and differs from table 3 only in that compound III (component 3) is Benzovindiflupyr but is otherwise identical to table 3.

Table 13 lists preferred uses of mixtures1-1.11 and 1-3.11 instead of 1-1.1 and 1-3.1 and differs from table 3 only in that compound III (component 3) is Inpyrfluxam but is otherwise identical to table 3.

Table 14 lists preferred uses of mixtures1-1.12 and 1-3.12 instead of 1-1.1 and 1-3.1 and differs from table 3 only in that compound III (component 3) is Fluindapyr but is otherwise identical to table 3.

Table 15 lists preferred uses of mixtures1-1.13 and 1-3.13 instead of 1-1.1 and 1-3.1 and differs from table 3 only in that compound III (component 3) is Epoxiconazole but is otherwise identical to table 3.

Table 16 lists preferred uses of mixtures1-1.14 and 1-3.14 instead of 1-1.1 and 1-3.1 and differs from table 3 only in that compound III (component 3) is Tebuconazole but is otherwise identical to table 3.

Table 17 lists preferred uses of mixtures1-1.15 and 1-3.15 instead of 1-1.1 and 1-3.1 and differs from table 3 only in that compound III (component 3) is Metconazole but is otherwise identical to table 3.

Table 18 lists preferred uses of mixtures1-1.16 and 1-3.16 instead of 1-1.1 and 1-3.1 and differs from table 3 only in that compound III (component 3) is Fenpropimorph but is otherwise identical to table 3.

Table 19 lists preferred uses of mixtures1-1.17 and 1-3.17 instead of 1-1.1 and 1-3.1 and differs from table 3 only in that compound III (component 3) is Fenpropidin but is otherwise identical to table 3.

Table 20 lists preferred uses of mixtures1-1.18 and 1-3.18 instead of 1-1.1 and 1-3.1 and differs from table 3 only in that compound III (component 3) is Fluoxytioconazole but is otherwise identical to table 3.

Mixtures according to the invention are suitable for combating phytopathogenic fungi, such fungi containing a mutation in the mitochondrial cytochrome b gene conferring resistance to Qo inhibitors, wherein the mutation is G143A or F129L.

The term "cereals" comprises wheat or barley.

These Fungi on wheat or barley containing a mutation in the mitochondrial cytochrome b gene conferring resistance to Qo inhibitors, wherein the mutation is G143A or F129L, are hereinafter referred to as "resistant fungi".

Resistant fungi on wheat or barley in the course of the use of the present invention, wherein the mutation is G143A are Septoria tritici, (leaf blotch) on wheat, Microduchium nivale, (head blight) on wheat, Blumeria graminis f. sp. tritici, (powdery mildew) on wheat, Phaesphaeria nodorum, (leaf blotch) on wheat, Pyrenophora tritici-repentis, (tan spot) on wheat, Rhynchosporium secalis, (leaf blotch) on barley, Blumeria graminis f. sp. hordei, (powdery mildew) on barley and Ramularia collo-cygni, (leaf spot) on barley.

The resistant fungi on wheat or barley in the course of the use of the present invention, wherein the mutation is F129L is Pyrenophora teres, (net blotch) on barley.

In soybean, the following pathogens show increasing resistance towards Qo inhibitors due to their G143A mutation:
Cercospora sojina (frogeye leaf spot) and Corynespora cassiicola (target spot).

Thus, the present invention relates to the use of mixtures according to the invention for combating resistant fungi on cereals, wherein the cereal is wheat, and the resistant fungi is Septoria tritici.

Thus, the present invention relates to the use of mixtures according to the invention for combating resistant fungi on cereals, wherein the cereal is wheat, and the resistant fungi is Microduchium nivale.

Thus, the present invention relates to the use of mixtures according to the invention for combating resistant fungi on cereals, wherein the cereal is wheat, and the resistant fungi is Blumeria graminis f. sp. tritici.

Thus, the present invention relates to the use of mixtures according to the invention for combating resistant fungi on cereals, wherein the cereal is wheat, and the resistant fungi is Phaesphaeria nodorum.

Thus, the present invention relates to the use of mixtures according to the invention for combating resistant fungi on cereals, wherein the cereal is wheat, and the resistant fungi is Pyrenophora tritici-repentis.

Thus, the present invention relates to the use of mixtures according to the invention for combating resistant fungi on cereals, wherein the cereal is barley, and the resistant fungi is Rhynchosporium secalis.

Thus, the present invention relates to the use of mixtures according to the invention for combating resistant fungi on cereals, wherein the cereal is barley, and the resistant fungi is Blumeria graminis f. sp. hordei.

Thus, the present invention relates to the use of mixtures according to the invention for combating resistant fungi on cereals, wherein the cereal is barley, and the resistant fungi is Pyrenophora teres.

Thus, the present invention relates to the use of mixtures according to the invention for combating resistant fungi on cereals, wherein the cereal is barley, and the resistant fungi is Ramularia collo-cygni.

In a more preferred embodiment, the present invention relates to the use of a mixtures according to the invention for combating resistant fungi on cereals, wherein the resistant fungi is Septoria tritici.

In a furthermore preferred embodiment, the present invention relates to the use of mixtures according to the invention for combating resistant fungi on cereals, wherein the cereal is barley, and the resistant fungi is Pyrenophora teres.

In a furthermore preferred embodiment, the present invention relates to the use of mixtures according to the invention for combating resistant fungi on cereals, wherein the cereal is barley, and the resistant fungi is Ramularia collo-cygni.

Thus, the present invention relates to the use of mixtures according to the invention- for combating resistant fungi on cereals, wherein the cereal is wheat, and the resistant fungi is Septoria tritici.

Thus, the present invention relates to the use of mixtures according to the invention- for combating resistant fungi on cereals, wherein the cereal is barley, and the resistant fungi is Pyrenophora teres.

Thus, the present invention relates to the use of mixtures according to the invention- for combating resistant fungi on cereals, wherein the cereal is barley, and the resistant fungi is Ramularia collo-cygni.

In general, "pesticidally effective amount" means the amount of the inventive mixtures or of compositions comprising the mixtures needed to achieve an observable effect on growth, including the effects of necrosis, death, retardation, prevention, and removal, destruction, or otherwise diminishing the occurrence and activity of the target organism. The pesticidally effective amount can vary for the various mixtures / compositions used in the invention. A pesticidally effective amount of the mixtures / compositions will also vary according to the prevailing conditions such as desired pesticidal effect and duration, weather, target species, locus, mode of application, and the like.

As said above, the present invention comprises a method for improving the health of plants, wherein the plant, the locus where the plant is growing or is expected to grow or plant propagation material, from which the plant grows, is treated with a plant health effective amount of an inventive mixture.

The term "plant effective amount" denotes an amount of the inventive mixtures, which is sufficient for achieving plant health effects as defined herein below. More exemplary information about amounts, ways of application and suitable ratios to be used is given below. Anyway, the skilled artisan is well aware of the fact that such an amount can vary in a broad range and is dependent on various factors, e.g. the treated cultivated plant or material and the climatic conditions.

When preparing the mixtures, it is preferred to employ the pure active compounds, to which further active compounds against pests, such as insecticides, herbicides, fungicides or else herbicidal or growth-regulating active compounds or fertilizers can be added as further active components according to need.

The inventive mixtures are employed by treating the fungi or the plants, plant propagation materials (preferably seeds), materials or soil to be protected from fungal attack with a pesticidally effective amount of the active compounds. The application can be carried out both before and after the infection of the materials, plants or plant propagation materials (preferably seeds) by the pests.

In the context of the present invention, the term plant refers to an entire plant, a part of the plant or the propagation material of the plant.

The inventive mixtures and compositions thereof are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (Table Grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

Preferably, the inventive mixtures and compositions thereof, respectively are used for controlling a multitude of fungi on field crops, such as potatoes, sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

Preferably, treatment of plant propagation materials with the inventive mixtures and compositions thereof, respectively, is used for controlling a multitude of fungi on cereals, such as wheat, rye, barley and oats; potatoes, tomatoes, vines, rice, corn, cotton and soybeans.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

The separate or joint application of the compounds of the inventive mixtures is carried out by spraying or dusting the seeds, the seedlings, the plants or the soils before or after sowing of the plants or before or after emergence of the plants.

The inventive mixtures and the compositions comprising them can be used for protecting wooden materials such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities).

Customary application rates in the protection of materials are, for example, from 0.01 g to 1000 g of active compound per m² treated material, desirably from 0.1 g to 50 g per m².

For use in spray compositions, the content of the mixture of the active ingredients is from 0.001 to 80 weight %, preferably from 0.01 to 50 weight % and most preferably from 0.01 to 15 weight %.

The present invention offers the following advantages:
It provides pesticidal mixtures which solve the problems of reducing the dosage rate and / or excellent spectrum of activity and / or combining knock-down activity with prolonged control and / or to resistance management and/or promoting the health of plants.

### Examples

### Example 1: Microtest Compounds I + II-1

The active compounds were formulated separately as a stock solution having a concentration of 10000 ppm in dimethyl sulfoxide.

The stock solutions were mixed according to the ratio, pipetted onto a micro titer plate (MTP) and diluted with water to the stated concentrations.

### 1. Activity against the grey mold Botrytis cinerea in the microtiterplate test (BOTRCI)

A spore suspension of *Botrci cinerea* in an aqueous biomalt or yeast-bactopeptone-sodiumacetate solution was then added.

### 2. Activity against rice blast Pyricularia oryzae in the microtiterplate test (PYRIOR)

A spore suspension of *Pyricularia oryzae* in an aqueous biomalt or yeast-bactopeptone-glycerine or DOB solution was then added.

### 3. Activity against leaf blotch on wheat caused by Septoria tritici (SEPTTR)

A spore suspension of *Septoria tritici* in an aqueous biomalt or yeast-bactopeptone-glycerine or DOB solution was then added.

### 4. Activity against early blight caused by Alternaria solani (ALTESO)

A spore suspension of *Alternaria solani* in an aqueous biomalt or yeast-bactopeptone-glycerine or DOB solution was then added.

### 5. Activity against anthracnose caused by Colletotrichum orbiculare in the microtiterplate test (COLLLA)

A spore suspension of Colletotrichum orbiculare in an aqueous bio malt solution was then added.

The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free blank value to determine the relative growth in % of the pathogens in the respective active compounds.

These percentages were converted into efficacies.

An efficacy of 0 means that the growth level of the pathogens corresponds to that of the untreated control; an efficacy of 100 means that the pathogens were not growing.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

### BOTRCI

| **Active compound / active mixture** | **Concentration (ppm)** | **Mixture** | **Observed efficacy** | **Calculated efficacy according to Colby (%)** | **Synergism (%)** |
|---|---|---|---|---|---|
| Compound II-1 | 1 | - | 13 | | |
| Methyltetraprol | 0.016 | - | 52 | | I |
| Compound II-1 | 1 | 63: 1 | 82 | 58 | 24 |
| Methyltetraprol | 0.016 | | | | |

### PYRIOR

| **Active compound / active mixture** | **Concentration (ppm)** | **Mixture** | **Observed efficacy** | **Calculated efficacy according to Colby (%)** | **Synergism (%)** |
|---|---|---|---|---|---|
| Compound II-1 | 1 | - | 10 | | |
| Methyltetraprol | 0.016 | - | 11 | | |
| | 0.004 | - | 3 | | |
| Compound II-1 | 1 | 63 : 1 | 81 | 20 | 61 |
| Methyltetraprol | 0.016 | | | | |
| Compound II-1 | 1 | 250 : 1 | 34 | 12 | 22 |
| Methyltetraprol | 0.004 | | | | |
| 6165966 | 0.25 | 16 : 1 | 86 | 66 | 20 |
| Methyltetraprol | 0.016 | | | | |

### SEPTTR

| **Active compound / active mixture** | **Concentration (ppm)** | **Mixture** | **Observed efficacy** | **Calculated efficacy according to Colby (%)** | **Synergism (%)** |
|---|---|---|---|---|---|
| Compound II-1 | 1 | - | 15 | | |
| Methyltetraprol | 0.063 | - | 66 | | |
| | 0.016 | - | 20 | | |
| | 0.004 | - | 0 | | |
| Compound II-1 | 1 | 16 : 1 | 92 | 72 | 20 |
| Methyltetraprol | 0.063 | | | | |
| Compound II-1 | 1 | 63 : 1 | 69 | 32 | 37 |
| Methyltetraprol | 0.016 | | | | |
| Compound II-1 | 1 | 250 : 1 | 34 | 15 | 19 |
| Methyltetraprol | 0.004 | | | | |

### ALTESO

| **Active compound / active mixture** | **Concentration (ppm)** | **Mixture** | **Observed efficacy** | **Calculated efficacy according to Colby (%)** | **Synergism (%)** |
|---|---|---|---|---|---|
| Compound II-1 | 1 | - | 42 | | |
| Methyltetraprol | 0.016 | - | 31 | | |
| | 0.004 | - | 12 | | |
| Compound II-1 | 1 | 63: 1 | 79 | 60 | 19 |
| Methyltetraprol | 0.016 | | | | |
| Compound II-1 | 1 | 250 : 1 | 71 | 49 | 22 |
| Methyltetraprol | 0.004 | | | | |

### COLLLA

| **Active compound / active mixture** | **Concentration (ppm)** | **Mixture** | **Observed efficacy** | **Calculated efficacy according to Colby (%)** | **Synergism (%)** |
|---|---|---|---|---|---|
| Compound II-1 | 1 | - | 0 | | |
| | 0.25 | - | 0 | | |
| Methyltetraprol | 0.063 | - | 0 | | |
| Compound II-1 | 1 | 16 : 1 | 41 | 0 | 41 |
| Methyltetraprol | 0.063 | | | | |
| Compound II-1 | 0.25 | 4 : 1 | 27 | 0 | 27 |
| Methyltetraprol | 0.063 | | | | |

### Example 2: Microtest Compounds I + II-2 (not according to the invention)

The active compounds were formulated separately as a stock solution having a concentration of 10000 ppm in dimethyl sulfoxide.

The stock solutions were mixed according to the ratio, pipetted onto a micro titer plate (MTP) and diluted with water to the stated concentrations.

### Activity against leaf blotch on wheat caused by Septoria tritici (SEPTTR)

A spore suspension of Septoria tritici in an aqueous biomalt or yeast-bactopeptone-glycerine or DOB solution was then added.

The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free blank value to determine the relative growth in % of the pathogens in the respective active compounds.

These percentages were converted into efficacies.

An efficacy of 0 means that the growth level of the pathogens corresponds to that of the untreated control; an efficacy of 100 means that the pathogens were not growing.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

| **Active compound / active mixture** | **Concentration (ppm)** | **Mixture** | **Observed efficacy** | **Calculated efficacy according to Colby** (%) | **Synergism (%)** |
|---|---|---|---|---|---|
| Compound II-2 | 0.25 | - | 9 | | |
| Methyltetraprol | 0.004 | - | 0 | | |
| Compound II-2 | 0.25 | 63 : 1 | 25 | 9 | 16 |
| Methyltetraprol | 0.004 | | | | |

## Claims

1. Fungicidal mixtures comprising, as active components,
1) 1-[2-[[1-(4-chlorophenyl)pyrazol-3-yl]oxymethyl]-3-methyl-phenyl]-4-methyl-tetrazol-5-one as compound I and
2) a fungicidal compound II, where compound II is compound II-1, compound II-1 being [(1S,2S)-1-methyl-2-(o-tolyl)propyl] (2S)-2-[(4-methoxy-3-propanoyloxy-pyridine-2-carbonyl)amino]propanoate.

2. A mixture according to claim, wherein the ratio by weight of compound I and compound II is from 500:1 to 1:500.

3. A mixture as claimed in any of claim 1 to 2, further comprising a fungicidal compound III selected from Mefentrifluconazol, Fluxapyroxad, Pyraclostrobin, copper oxychloride, Mancozeb, Chlorothalonil, Prothioconazole, Difenoconazole, Pydiflumetofen, Benzovindiflupyr, Inpyrfluxam, Fluindapyr, Epoxiconazole, Tebuconazole, Metconazole, Fenpropimorph, Fenpropidin and Fluoxytioconazole.

4. A pesticidal composition, comprising a liquid or solid carrier and a mixture as defined in any of claims 1 to 3.

5. A non-therapeutic method for controlling phytopathogenic pests, wherein the pest, their habitat, breeding grounds, their locus or the plants to be protected against pest attack, the soil or plant propagation material are treated with an effective amount of a mixture or composition as defined in any of claims 1 to 4.

6. The method according to of claim 5 for controlling phytopathogenic harmful fungi on soybean.

7. The method according to any of claims 5 to 6 for controlling Phakopsora pachyrhizi, P. meibomiae (soybean rust), Cercospora sojina, Cercospora kikuchii, Corynospera cassiicula, Colletotrichum truncatum, Sclerotinia sclerotiorum, Microsphaera diffusa, Septoria glycine, Peronospora manshurica or Diaporthe caulivora (D. phaseolorum var. Caulivora), in each case on soybean.

8. The method according to any of claims 5 to 7 for controlling *Phakopsora pachyrhizi* and P. *meibomiae* (soybean rust).

9. The method according to any of claims 5 to 7 for controlling *Cercospora sojina, C*. *Cercospora kikuchii or Corynospera cassiicula* on soybean.

10. A method for improving the health of plants, wherein the plant, the locus where the plant is growing or is expected to grow or plant propagation material from which the plant grows are treated with an effective amount of a mixture or composition as defined in any of claims 1 to 4.

11. A method for protection of plant propagation material from pests comprising contacting the plant propagation materials with a mixture or composition as defined in any of claims 1 to 4 in pesticidally effective amounts.

12. A method as claimed in any of claims 5 to 11, wherein the active ingredients of the mixture as defined in any of claims 1 to 4 are applied simultaneously, that is jointly or separately, or in succession.

13. Plant propagation material, comprising the mixture as defined in any of claims 1 to 4 in an amount of from 0.01 g to 10 kg per 100 kg of plant propagation materials.

## Patentansprüche

1. Fungizide Mischungen, umfassend als Wirkkomponenten
1) 1-[2-[[1-[(4-Chlorphenyl)pyrazol-3-yl]oxymethyl]-3-methylphenyl]-4-methyltetrazol-5-on als Verbindung I und
2) eine fungizide Verbindung II, wobei es sich bei Verbindung II um Verbindung II-1 handelt, wobei es sich bei Verbindung II-1 um (2S)-2-[(4-Methoxy-3-propanoyloxypyridin-2-carbonyl)amino]propansäure[(1S,2S)-1-methyl-2-(o-tolyl)propyl]ester handelt.

2. Mischung nach Anspruch 1, wobei das Gewichtsverhältnis von Verbindung I und Verbindung II 500:1 bis 1:500 beträgt.

3. Mischung nach einem der Ansprüche 1 bis 2, ferner umfassend eine fungizide Verbindung III, ausgewählt aus Mefentrifluconazol, Fluxapyroxad, Pyraclostrobin, Kupferoxychlorid, Mancozeb, Chlorothalonil, Prothioconazol, Difenoconazol, Pydiflumetofen, Benzovindiflupyr, Inpyrfluxam, Fluindapyr, Epoxiconazol, Tebuconazol, Metconazol, Fenpropimorph, Fenpropidin und Fluoxytioconazol.

4. Pestizide Zusammensetzung, umfassend einen flüssigen oder festen Träger und eine wie in einem der Ansprüche 1 bis 3 definierte Mischung.

5. Nichttherapeutisches Verfahren zur Bekämpfung von phytopathogenen Schädlingen, wobei die Schädlinge, ihr Lebensraum, Brutstätten, ihr Standort oder die gegen Schädlingsbefall zu schützenden Pflanzen, der Erdboden oder Pflanzenfortpflanzungsmaterial mit einer wirksamen Menge der wie in einem der Ansprüche 1 bis 4 definierten Mischung bzw. Zusammensetzung behandelt werden.

6. Verfahren nach Anspruch 5 zur Bekämpfung von phytopathogenen Schadpilzen auf Sojabohnen.

7. Verfahren nach einem der Ansprüche 5 bis 6 zur Bekämpfung von Phakopsora pachyrhizi, P. meibomiae (Sojabohnenrost), Cercospora sojina, Cercospora kikuchii, Corynospera cassiicula, Colletotrichum truncatum, Sclerotinia sclerotiorum, Microsphaera diffusa, Septoria glycin, Peronospora manshurica oder Diaporthe caulivora (D. phaseolorum var. Caulivora), jeweils auf Sojabohnen.

8. Verfahren nach einem der Ansprüche 5 bis 7 zur Bekämpfung von Phakopsora pachyrhizi und P. meibomiae (Sojabohnenrost).

9. Verfahren nach einem der Ansprüche 5 bis 7 zur Bekämpfung von Cercospora sojina, C. Cercospora kikuchii oder Corynospera cassiicula auf Sojabohnen.

10. Verfahren zur Verbesserung der Pflanzengesundheit, bei dem man die Pflanze, den Standort, an dem die Pflanze wächst oder wachsen soll, oder Pflanzenfortpflanzungsmaterial, aus dem die Pflanze wächst, mit einer wirksamen Menge einer wie in einem der Ansprüche 1 bis 4 definierten Mischung bzw. Zusammensetzung behandelt.

11. Verfahren zum Schutz von Pflanzenfortpflanzungsmaterial gegen Schädlinge, umfassend das Inkontaktbringen der Pflanzenfortpflanzungsmaterialien mit einer wie in einem der Ansprüche 1 bis 4 definierten Mischung bzw. Zusammensetzung in pestizid wirksamen Mengen.

12. Verfahren nach einem der Ansprüche 5 bis 11, bei dem man die Wirkstoffe der wie in einem der Ansprüche 1 bis 4 definierten Mischung gleichzeitig, und zwar gemeinsam oder getrennt, oder nacheinander ausbringt.

13. Pflanzenfortpflanzungsmaterial, umfassend die wie in einem der Ansprüche 1 bis 4 definierte Mischung in einer Menge von 0,01 g bis 10 kg pro 100 kg Pflanzenfortpflanzungsmaterialien.

## Revendications

1. Mélanges fongicides comprenant, comme composants actifs,
1) 1-[2-[[1-(4-chlorophényl)pyrazol-3-yl]oxyméthyl]-3-méthyl-phényl]-4-méthyl-tétrazol-5-one comme composé I et
2) un composé fongicide II, dans lequel le composé II est le composé II-1, le composé II-1 étant (2S)-2-[(4-méthoxy-3-propanoyloxy-pyridine-2-carbonyl)amino]propanoate de [(1S,2S)-1-méthyl-2-(o-tolyl)propyle].

2. Mélange selon la revendication, dans lequel le rapport en poids du composé I et du composé II est de 500:1 à 1:500.

3. Mélange selon l'une quelconque des revendications 1 et 2, comprenant en outre un composé fongicide III choisi parmi Méfentrifluconazole, Fluxapyroxad, Pyraclostrobine, oxychlorure de cuivre, Mancozèbe, Chlorothalonil, Prothioconazole, Difénoconazole, Pydiflumétofène, Benzovindiflupyr, Inpyrfluxam, Fluindapyr, Époxiconazole, Tébuconazole, Metconazole, Fenpropimorphe, Fenpropidine et Fluoxytioconazole.

4. Composition pesticide, comprenant un support liquide ou solide et un mélange tel que défini dans l'une quelconque des revendications 1 à 3.

5. Procédé non thérapeutique pour la lutte contre des organismes nuisibles phytopathogènes, dans lequel l'organisme nuisible, leur habitat, lieux de reproduction, leur site ou les végétaux à protéger contre une attaque par des organismes nuisibles, le sol ou le matériel de propagation végétale sont traités par une quantité efficace d'un mélange ou d'une composition tel(le) que défini(e) dans l'une quelconque des revendications 1 à 4.

6. Procédé selon la revendication 5 pour la lutte contre des champignons nuisibles phytopathogènes sur le soja.

7. Procédé selon l'une quelconque des revendications 5 à 6 pour la lutte contre Phakopsora pachyrhizi, P. meibomiae (rouille du soja), Cercospora sojina, Cercospora kikuchii, Corynospera cassiicula, Colletotrichum truncatum, Sclerotinia sclerotiorum, Microsphaera diffusa, Septoria glycine, Peronospora manshurica ou Diaporthe caulivora (D. phaseolorum var. Caulivora), en chaque cas sur le soja.

8. Procédé selon l'une quelconque des revendications 5 à 7 pour la lutte contre Phakopsora pachyrhizi et P. meibomiae (rouille du soja).

9. Procédé selon l'une quelconque des revendications 5 à 7 pour la lutte contre Cercospora sojina, C. Cercospora kikuchii ou Corynospera cassiicula sur le soja.

10. Procédé d'amélioration de la santé des végétaux, dans lequel le végétal, le site où le végétal pousse ou est censé pousser ou le matériel de propagation végétale à partir duquel le végétal pousse sont traités par une quantité efficace d'un mélange ou d'une composition tel(le) que défini(e) dans l'une quelconque des revendications 1 à 4.

11. Procédé de protection d'un matériel de propagation végétale contre des organismes nuisibles comprenant la mise en contact des matériels de propagation végétale avec un mélange ou une composition tel(le) que défini(e) dans l'une quelconque des revendications 1 à 4 en des quantités efficaces sur le plan pesticide.

12. Procédé selon l'une quelconque des revendications 5 à 11, dans lequel les ingrédients actifs du mélange tel que défini dans l'une quelconque des revendications 1 à 4 sont appliqués simultanément, c'est-à-dire conjointement ou séparément, ou successivement.

13. Matériel de propagation végétale, comprenant le mélange tel que défini dans l'une quelconque des revendications 1 à 4 en une quantité allant de 0,01 à 10 kg par 100 kg de matériels de propagation végétale.
